(19)

Europäisches
Patentamt
European
Patent Office
Office européen
des brevets

(11)     EP 2 340 720 B1

(12)     **EUROPEAN PATENT SPECIFICATION**

(45) Date of publication and mention
of the grant of the patent:
**10.10.2012 Bulletin 2012/41**

(51) Int Cl.:
*A23D 9/00* *(2006.01)*     *C11C 3/10* *(2006.01)*

(21) Application number: **10195050.9**

(22) Date of filing: **15.12.2010**

(54) **Process for producing a fat composition**

Verfahren zur Herstellung einer Fettzusammensetzung

Procédé de production d'une composition de corps gras

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.12.2009 EP 09179755**

(43) Date of publication of application:
**06.07.2011 Bulletin 2011/27**

(73) Proprietor: **Fuji Oil Europe
9042 Gent (BE)**

(72) Inventors:
• **Cleenewerck, Bernard
8301, Knokke-Heist (BE)**
• **Demeurisse, Jeroen
9870, Olsene (BE)**

(74) Representative: **Caers, Raphael Frans Ivo et al
Gevers Patents
Holidaystraat 5
1831 Diegem (BE)**

(56) References cited:
**EP-A1- 1 731 594          WO-A1-2004/112492
US-A1- 2005 163 909**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a process for modifying a fat composition with a steep SFC-profile, wherein the fat composition contains a substantial amount of rearranged triglycerides. The fat composition is suitable for use in food products, like confectionery products.

## Background of the invention.

Triglyceride compositions, also called fat compositions, with a steep SFC-profile are usually produced by subjecting a fat to a fractionation and/or a hydrogenation reaction. Fat compositions with a steep SFC-profile have a solid fat content (SFC) as a function of temperature, which is high at room temperature, whereas at body temperature the solid fat content is low and the fat is completely molten. A well known example of a vegetable fat composition with a steep SFC-profile is a palm mid fraction (PMF), which is obtained by fractionation of a palm oil. PMF are often used in confectionery products, like creams, fillings and coatings. The most important advantages of PMF-based fats are their non-lauric nature, the lower content of saturated fatty acids, the fresh melting sensation upon eating and the fact that PMF is a non-hydrogenated fat. A disadvantage of PMF is the slow solidification rate, which necessitates in the confectionery plant the use of devices with high cooling capacities. Besides this, PMF based fats show a risk to re-crystallisation, causing "graininess" of the final product when stored for some time, in particular in case no tempering is applied.

In order to overcome the disadvantages of PMF, methods have been developed in which the PMF is combined with a second fat obtained through interesterification and fractionation of an initial fat composition, or in which the PMF is even completely replaced by such an interesterified second fat. This second fat also has a steep SFC-profile and due to the fact that it is interesterified, it contains high amounts of mixed and/or asymmetrical triglycerides. With mixed triglycerides is meant triglycerides, which contain a combination of fatty acids in a triglyceride molecule, that is normally not or hardly present in natural oils and fats. Asymmetrical triglycerides, symbolically indicated as SSU (S is a saturated fatty acid and U is unsaturated fatty acid), are triglycerides, which in contrast to symmetrical triglycerides (SUS), have a saturated fatty acid in the mid position and a saturated and an unsaturated fatty acid in the outer positions.

Several patent publications describe the use of mixtures of symmetrical fats with asymmetrical fats, wherein the symmetrical fats are mostly PMF obtained by double fractionation of palm oil, and the asymmetrical fats are mostly obtained by fractionating a fat that has first been randomised by chemical interesterification. The term randomised indicates that a random rearrangement of fatty acids on the triglyceride backbone took place. Usually randomisation is done by interesterifying a fat in the presence of a chemical catalyst, for instance sodium methylate, but it can also be done by thoroughly rearranging the fatty acids in the triglyceride in the presence of an enzyme as catalyst. The advantage of randomising a fat is that it creates high amounts of asymmetrical triglycerides, which do not tend to re-crystallise and which are capable of binding liquid oil and thus permit minimising the risk to oiling out of a liquid fraction from a food product. The disadvantage however is that many randomised fats have a flat to very flat SFC-profile, meaning that they are too soft at room temperature and that they contain quite high amounts of high melting triglycerides, causing a waxy mouthfeel upon eating. This makes it necessary to fractionate these interesterified fats, which is a quite difficult and laborious process.

EP-A-803196 describes a process for making a hard butter composition, which comprises admixing about 20-50 parts by weight of an additive composition with 100 parts by weight of other raw materials for hard butter. The additive composition comprises the middle melting point fraction of random interesterified palm stearin. The other raw materials comprise the middle point fraction of palm oil (PMF), but they do not include trans-isomerized fats or lauric fats. Example 1 in EP 803196 describes a middle melting point fraction, which is rich in asymmetrical SSU triglycerides. The middle melting point fraction is obtained by first subjecting a palm stearin to a random interesterification process in the presence of sodium methylate as a catalyst, followed by a first solvent fractionation with hexane and a second fractionation with acetone. This fraction is then mixed with a palm mid fraction with an IV (iodine value) of 45. The fat composition obtained by combining both fractions may then be used for the production of chocolate products, which may be manufactured without tempering. The final product has a good stability against fat bloom development.

EP-A-545.463 describes non-tempering, non-trans, all-vegetable confectionery fat compositions comprising at least a cocoa butter replacement fat A which is high in SSU and a fat B, which is high in SOS'. Fat A displays the following ratio of solid fat indices, stabilised and unstabilised at 30°C: N30 stab/ N30 unstab = 1-3. Fats A and B are present in ratios which are such that a fat blend is provided with an SSU content of at least 50 % and an S'OS' content of less than 30 wt. %, wherein S = saturated fatty acid having C16-C24, S' = saturated fatty acid having C16-C18, O = Oleic acid and U =predominantly oleic and /or linoleic acid. The application of these fat compositions in confectionery coating recipes is demonstrated. Suitable fats A are fractions of an enzymatically made product from the conversion of a fat rich in saturated fatty acids, in particular a palm top fraction high in PPP, and a compound providing oleic acid moieties, such as those disclosed in EP 209327. From the above it becomes clear that fat A is a hard fat fraction with a very high content of asymmetrical triglycerides, as demonstrated in the examples of EP-A-545463. The most preferred fat B is cocoa butter.

EP-A-0.536.824 solves the problem of providing a non-temper confectionery fat composition which is free of trans fatty acids. The composition consists of a first fat which is a double fractionated palm mid fraction obtained by wet fractionation and which contains more than 70 wt. % POP triglycerides and is capable of crystallising in the Beta crystal form. The first fat is combined with a second fat, capable of stabilising Beta prime crystals and comprising triglycerides of the SSO and/or S3-type. An example of the second fat is a PPO-rich fat having a PPO content of 65.5 wt. % produced as disclosed in EP 209327. The application of these fat compositions in confectionery coating recipes is demonstrated.

GB-A-1.111.324 describes a process for the preparation of a fat for use as cocoa butter substitute. The process comprises transesterifying a fat mixture with a chemical catalyst, followed by a fractionation step and pressing or filtering the thus obtained mixture to remove the high-melting components. Fat compositions, suitable for use in cocoa butter substitutes comprise the thus obtained fat combined with fractionated shea oil, fractionated palm oil, or a combination of both.

In the prior art described above, a first fat which has been obtained by fractionation is always combined with a second fat obtained by interesterification and fractionation. Thereby, the two fat components are prepared separately. When preparing the combination, finding the right balance in the amount of symmetrical and asymmetrical triglycerides is quite critical for the stability of the final product, whereas the steep SFC-profile is important for its eating quality.

In EP-B-1.893.732 a fat composition and a method to prepare this fat composition is disclosed. The method consists of subjecting a blend of an amount of at least one lauric fat and an amount of at least one non-lauric fat to an interesterification step. The fat composition obtained from the interesterification step has a steep SFC-profile and therefore it is suitable for use in confectionery applications. Although this fat is very useful in a wide range of food applications, it also shows some disadvantages, in particular its quite high level of saturated fatty acids and its high content of lauric fatty acids, which is a risk in relation to the possible development of a soapy flavour.

WO 2004/112492 discloses a hydrogenation process for the production of low-trans fat compositions suitable for use as confectionary fats, and which may employ as part of the hydrogenation feedstock at least one interesterified fat. WO 2004/112492 always uses random interesterified palm oil as the interesterified fat, and either blends this with PMF or subjects it to fractionation. The SFC profile of the random interesterified palm oil itself is not provided. According to D.A.Allen, "Interesterification - a vital tool for the future?", in Lipid Technology, January 1996, pp. 11-13, random interesterified palm oil has an SFC at 20°C of 35% and an SFC at 35°C of 11%, as measured by pulsed NMR.

WO 03/037095 teaches a non-lauric, non-trans, non-temper fat composition comprising a fraction obtained from randomised triglyceride mixtures

- in which minimum 90 wt. % of the constituent fatty acids are: palmitic acid (C16-0), stearic acid (C18-0) arachidic acid (C20-0), behenic acid (C22-0), oleic acid (C18-1) and linoleic acid (C18-2), and
- in which the total content of C20-0 and C22-0 fatty acids is 3-40 wt. %
  and the total content of C16-0 and C18-0 is 25-60 wt. %,
  said fraction having the following physical and chemical properties:

  (1) slip melting point below 36°C and solid fat content (stabilised 24h at 20°C) above 25 % at 20°C,
  (2) total saturated fatty acid content 40-75 wt. %
  (3) total content of C-20 and C-22 fatty acids of 3-40 wt% and total content of C-16 and C-18 fatty acids between 25 and 60 wt. %
  (4) total content of triglycerides with a triglyceride composition of C56-C60 (total number of carbon atoms in the triglyceride) minimum 9 wt. %
  (5) total content of S2U triglycerides minimum 25 wt. %.

The term randomisation refers to a random distribution of the fatty acids, more correctly their residues, on the glycerol molecules. It is explained on page 12, line 13-22 of WO 03/037095, that the triglyceride mixture resulting from the rearrangement of the six basic fatty acids in the starting triglyceride mixture will contain up to 126 different triacylglycerols (TAGs) not accounting for enantiomers. The process for preparing such fat composition comprises (1) a randomisation step, done by transesterification using as a catalyst an acid, alkaline or metal catalyst or an enzyme, followed by (2) a fractionation step, wherein the fractionation is done by removal of high melting, and optionally, low melting triglycerides by pressurised filtration fractionation or solvent fractionation. Fat compositions for confectionery applications are claimed, comprising a vegetable oil or fat and a fat described above in a ratio 98-5 wt % to 2-65 wt%.

Example 1 describes that high erucic acid rapeseed oil is first fully hydrogenated, then subjected to a chemical interesterification in the presence of palm olein, rapeseed oil and or sunflower oil, which interesterification is followed by double solvent fractionation with hexane, to obtain a mid fraction with a steep SFC-profile and a slip melting point below 36°C. Application of the obtained fats is demonstrated in confectionery products like fillings and coatings. No tempering step is necessary. The thus obtained fat is used as main fat component or in combination with other fats like for instance cocoa butter, milk fat, palm mid fraction (PMF), etc..

The method disclosed by WO 03/037095 is long, laborious and expensive, since the fat obtained by randomisation has a flat SFC-profile which imposes a subsequent two step fractionation process, preferably by means of a solvent, to permit obtaining a fat with the desired SFC-profile, i.e. with sufficient hardness at 20°C and a slip melting point below 36°C.

US 2005/0163909 is concerned with providing a fat composition for use as a confectionary fat, which is non-lauric and which is characterised by a steep SFC-profile. The document proposes to use a particular hydrogenation process for this purpose. The first fat, obtained from hydrogenation, may be combined with a second fat, which can be obtained by a number of processes which may include a step of interesterification. The second fat may be an interesterified palm stearin which is subjected to an additional fractionation step, in order to give it a steep SFC-profile. The process of US 2005/0163909 is complex and has a relatively low prime product yield.

EP 1731594 A1 is directed to non-hydrogenated fat compositions having a steep SFC-profile, which are obtained by chemically interesterifying a fat blend containing at least 27 %wt of lauric (C12) fatty acid.

WO 99/14294 describes a method for the production of a modified triacylglycerol stock, which includes chemical, partial interesterification in the presence of a basic catalyst, while monitoring the absorbance of the reaction mixture. The latter can be used to predict and monitor the degree of interesterification. A reaction mixture which is particularly suitable for modification using this process is a blend of a hardstock and a softstock component. A hardstock typically has a Iodine Value (IV) of not more than 90, preferably not more than 70. The softstock is a lauric fat or a liquid oil. The degree of interesterification can be measured based on a variety of properties of the fat blend, like its solid fat content (SFC), carbon number or melting point, but the measurement of the absorbance provides a technique to monitor the reaction on-line. In the examples it is demonstrated that a good correlation exists between absorbance measurements and SFC: with increasing degree of interesterification, the SFC at 40°C is decreasing and the absorbance at 374.4 nm is increasing. All examples of non-lauric, partially interesterified mixtures have a flat SFC-profile, which makes them suitable for margarine application.

From the above it becomes clear that there is a need for a simplified method to produce functional triglyceride mixtures, which are suitable for use in applications like confectionery fats, and which are characterised by a steep SFC-profile and have a limited content of lauric fatty acids.

## Object of the invention.

A first object of the invention is to provide a simplified process for modifying a preferably vegetable fat composition which shows a steep SFC-profile, which contains a substantial amount of rearranged triglycerides and a limited amount of lauric acid. A further object of the invention is to provide a product which contains a balanced amount of symmetrical and asymmetrical triglycerides, to combine optimal mouthfeel and stability.

## Description of the invention

It has now been found with the present invention that this object is achieved with a process which contains the step of subjecting a triglyceride composition which contains less than 15 wt. %, preferably less than 10 wt. %, most preferably less than 5 wt. % of lauric acid and at least 15 wt. % of SUS, to a partial interesterification step in the presence of an interesterification catalyst, wherein the interesterification reaction is continued until a partially interesterified triglyceride composition is obtained with a degree of interesterification of between 10 and 90 % and an SFC-profile which is such that

- The SFC of the interesterified fat at 20°C is more than 25%, preferably more than 35%, more preferably more than 45%, most preferably more than 50%,
- The SFC of the interesterified fat at 35°C is less than 27%, preferably less than 20%, more preferably less than 15%, and
- the difference between the SFC of the interesterified fat at 20°C and 35°C is at least 25% preferably at least 30%,

whereby the SFC is the SFC measured according to method IUPAC 2.150 a.

With a partial interesterification is meant that the triglyceride composition is subjected to an interesterification reaction, which may be either chemical or enzymatic catalysed, which causes rearrangement of the fatty acids on the glycerol backbone, wherein the interesterification is interrupted before a reaction equilibrium or a complete random distribution of the fatty acids on the glycerol backbone is obtained. In particular, in the course of the interesterification step, SUS type triglycerides will at least partly be converted into SSU type triglycerides.

In case of chemical interesterification, the reaction may usually proceed at a high reaction rate, so that partial interesterification may take a very short reaction time, and the interesterification reaction may have to be interrupted after a short period of time to permit achieving partial interesterification. In case of enzymatic interesterification, the reaction is usually much slower and complete randomisation requires much more time. For example, full randomisation may take a day or more. Depending on the reaction conditions, like the amount of enzyme or reaction temperature, the reaction time needed to achieve a certain degree of partial interesterification, may vary from a number of minutes to several hours. Since the enzymatic interesterification reaction can be better controlled than chemical interesterification, in particular in relation to the degree of randomisation, the use of the enzymatic interesterification process is preferred in this invention. In the process of this invention, preferably an enzymatic catalyst is used which is capable of randomising a fat, i.e. to rearrange the fatty acids on the glycerol backbone in a random way. Suitable enzymes which may be used for the purpose of the current invention include, but are not limited to, Lipozyme TL IM, Lipozyme RM IM, Novozym 435, Lipase AK, or combinations thereof.

To express the degree (D) of partial interesterification, several parameters and several expressions may be used. According to the present invention the degree of interesterification is preferably calculated and expressed as given in formula 1 below :

$$D = \frac{A.V.(SFC\ PIE35 - SFC\ NIE35)}{A.V.(SFC\ FIE35 - SFC\ NIE35)} \qquad \text{(formula 1)}$$

Wherein

- SFC PIE35 is the SFC at 35°C of the partially interesterified fat blend,
- SFC FIE35 is the SFC at 35°C of the fat blend after complete interesterification, and
- SFC NIE35 is the SFC at 35 C of the fat blend before interesterification, and wherein A.V. designates the absolute value of the difference.

In the above, complete interesterification means that the interesterification reaction is continued for a time which is sufficiently long to achieve equilibrium. The state of equilibrium may for instance be established by the fact that the SFC at 35°C does not change any further in time during the reaction. Because of the shorter time, the better predictability and the lower cost, the applicant prefers to use a chemical interesterification step in order to establish the SFC at 35°C of a blend after complete interesterification, i.e. when equilibrium is supposed to have been reached.

In the case an enzymatic esterification process is selected for the process according to the invention, an important cost factor is the amount of enzyme to be used. This amount may vary depending on the amount of impurities or poisons present in the feedstock for the interesterification process. Such compounds may negatively affect enzyme activity. Components which potentially may have such negative effect, and which therefore preferably are removed or at least minimised in the feedstock, in one or more of the process steps prior to the enzymatic treatment, are for instance organic and/or inorganic P-, Cl- or Fe-compounds, oxidation compounds, and heavy metals.

According to the current invention, interesterification is preferably continued until a degree of interesterification is achieved of between 10 and 80 %, preferably between 20 and 60 %. Contrary to the process of partial chemical interesterification described in WO 99/14294, where, after an increasing degree of partial interesterification the SFC at 40°C is decreasing (fig 4), the process of the current invention preferably shows an increase of the SFC at 35 or 40°C with an increasing degree of interesterification. So, preferably the fat composition of this invention will have an SFC at 35°C after the partial interesterification step which is lower when compared to the same composition after complete reaction to equilibrium or full randomisation.

In order to maintain a certain steepness of the SFC profile after partial interesterification, it is recommendable to start with a triglyceride composition which has an SFC profile which is steep enough. Therefore the vegetable fat composition which is subjected to partial interesterification is preferably a fractionated fat with a low S3 content, preferably a fat which has the following SFC profile :

SFC20 - SFC35 > 25%, preferably > 35%, more preferably > 45%.

wherein SFC20 is the SFC at 20°C and SFC35 is the SFC at 35°C. In the course of interesterification, usually the S3 content will increase.

Preferably the composition before partial interesterification contains a minimum amount of symmetrical triglycerides. Thereto, the triglyceride composition which is subjected to interesterification preferably has an SUS-content of at least 20 wt. %, preferably at least 30 wt. %, more preferably at least 35 wt. %, whereby S is a saturated fatty acid with 16 to 24 carbon atoms, U is unsaturated C18. A typical fat which fulfils this requirement is a palm mid fraction. Other suitable fats may be the so called wild fats like shea butter, sal fat, illipe, kokum, mango or enzymatically prepared fats with a high SUS content using a 1-3 specific enzyme, and fractions or blends of two or more of the afore mentioned fats. This way mouthfeel of the interesterified mixture may be optimised.

The S3-content of the triglyceride composition which is subjected to partial interesterification is preferably less than 20 wt. %, preferably less than 15 wt. %, more preferably less than 10 wt. %, whereby S represents a saturated fatty acid with 16 to 24 carbon atoms. A too high S3 content causes so called "tailing", responsible for a waxy mouthfeel upon consumption. After partial interesterification this S3-content may still be high and in certain cases it may even increase following interesterification.

In case the S3-content after partial interesterification is too high, or in case the intended application requires a yet steeper SFC-curve, the process of this invention may comprise a fractionation step after the partial interesterification step to remove high melting compounds. In this case, in order to further steepen the SFC-profile, a less complicated and less laborious fractionation scheme may be provided by the present invention, in comparison to the processes described in the prior art. The fractionation may be carried out using any process considered suitable by the skilled person, which means that dry as well as solvent fractionation processes may be carried out.

The interesterification reaction is preferably continued until a triglyceride composition is obtained with a SUS/SSU ratio of less than 6, preferably less than 4, more preferably less than 3. Such compositions have an optimal mouthfeel quality combined with sufficient stability towards possible recrystallisation and/or the risk to develop graininess.

In an embodiment, the process according to the present invention further comprises the step of employing the modified triglyceride composition or a fraction thereof as confectionary fat or bakery fat.

In another embodiment, the process according to the present invention further comprises the step of incorporating the modified triglyceride composition or a fraction thereof into a food product, the food product preferably being selected from the group of a confectionery coating, a confectionary filling or cream, a whipping cream, a dough fat and an ice cream fat.

The present invention also relates to a modified triglyceride composition obtained by the above described process, wherein the triglyceride composition after partial interesterification

- has an SFC at 20°C of at least 25%, preferably at least 35%, more preferably at least 45%, most preferably at least 50%,
- has an SFC at 35°C of less than 27%, preferably less than 20%, more preferably less than 15%, and
- the difference between the SFC of the fat composition at 20°C and the SFC at 35°C is at least 25% preferably at least 30%,

whereby the SFC is the SFC measured according to method IUPAC 2.150 a.

The present invention further relates to an interesterified triglyceride composition, which is characterised by a SUS/SSU ratio of less than 6 preferably less than 4, more preferably less than 3. In certain applications an optimum SUS/SSU ratio may be required, since this guarantees an optimal mouthfeel quality combined with sufficient stability towards possible recrystallisation and/or the risk to develop graininess.

The present invention further relates to the use of the triglyceride composition obtained with the above described process, or the above described triglyceride composition as confectionery or bakery fat.

The present invention also relates to food products containing the triglyceride composition obtained with the above described process, or the above described triglyceride composition

Preferably the food products are selected from the group of confectionery coating, confectionery fillings or creams, whipping creams, dough fats, and ice cream fats.

The present invention is further elucidated in the examples given below.

**Examples**

Example 1

A midfraction of palm oil (PMF) was enzymatically interesterified until partial interesterification was achieved. Thereto, use was made of 4 wt. % of a Lipozyme TL IM with respect to the weight of the reaction mixture, which is capable of randomising fats. Interesterification was carried out at a temperature of 70°C. The amount of enzyme used in this example serves as an example, but good results can also be obtained with lower amounts of enzymes, for instance 1 wt. % or even less. After 4 hours reaction a sample was taken and after filtration of the immobilized enzyme the Solid Fat Content (SFC) was measured. The results of the SFC measurements of the SFC at 20°C, 30°C and 40°C are given in Table 1 below.

For comparison, the same PMF was also subjected to chemical interesterification at 70°C, using sodium methylate as a catalyst. The SFC of the fully and chemically interesterified product, which was obtained after a reaction time of 30 minutes is also given in table 1.

Table 1

|  | Non Interesterified PMF | Partially interesterified PMF | Chemically Interesterified PMF |
|---|---|---|---|
|  | PMF$_{NIE}$ | PMF$_{PIE}$ | PMF$_{FIE}$ = PMF$_{CIE}$ |
| SFC 20°C | 80.9% | 62.6% | 71.0% |
| SFC 35°C | 0% | 22.5% | 33.9% |
| SFC 40°C | 0% | 15.5% | 24.9% |
| D (%) | 0% | 66.4% | 100% |

In this table the following abbreviations have been used:
NIE = not interesterified
PIE = partially interesterified
CIE = chemically interesterified (complete randomisation) = FIE = full interesterification

$$D = \text{degree of interesterification} = \frac{|SFCpie35 - SFCnie35|}{|SFCfie35 - SFCnie35|}$$

S = saturated fatty acid having 16-18 carbon atoms, and
U = unsaturated fatty acid having 18 C-atoms.

In contrast to WO 99/14294, where after an increasing degree of partial interesterification the SFC at 40°C is decreasing (fig 4), in the present invention an increase of SFC with increasing degree of interesterification has been observed. Nevertheless, the fat made according to the invention has a SFC at 35 and 40°C which is lower compared to the same fat after complete randomisation.

This example illustrates that after partial interesterification a fat is obtained with a steep SFC profile.

The fat is further characterised by a clearly improved resistance against re-crystallisation compared to the starting fat.

Example 2

A midfraction of palm oil (PMF) was prepared on laboratory scale according as follows: In a first fractionation step crude palm oil, containing 4.71%wt of free fatty acids and characterised by a iodine value (IV) of 52.1 and a Deterioration of Bleachability Index or DOBI value of 2.85, was cooled in a temperature controlled water bath (set at 28°C, in a Haake R apparatus provided with a Haake N3 circulator) under agitation (at 500 rpm, using IKA Labortechnik Eurostar Digital equipment and a three bladed mixing propeller) from an oil temperature of 60°C down to 28°C. A vacuum filtration using a Büchner filter with Whatman filter paper type 541 was performed when the slurry reached 6 to 7%wt solid fat content (as measured by a NMS 120 Minispec NMR analyser from Bruker). This fractionation step resulted in crude palm stearin with an iodine value 39.9 and crude palm olein with an iodine value of 55.4.

A bleaching and a deodorisation step was used to refine the resulting crude palm olein. For the bleaching step, 1.5 wt% bleaching earth (Mitsubishi Galleon earth V2 Super) was added to the oil, followed by a gentle agitation under vacuum for 60 minutes at a temperature of 110°C, and filtering.

After filtration of the bleaching earth, the oil was deodorised by a steam stripping step at 225°C. Such a refined palm olein has different applications, such as for example the use in spreads, baby food, soft fillings, but is also suitable for further processing by fractionation.

In a second fractionation step, the refined palm olein was cooled under agitation from an oil temperature of 60°C down to 17°C in a water bath (using identical equipment as in the first fractionation step). A filtration (at 2 bar, using a Choquenet pilot filter press) was performed when the slurry reached 15 to 20%wt solid fat content. This fractionation step resulted in a stearin fraction with an iodine value of 45 (further herein identified as the Palm Mid Fraction) and an olein fraction with an iodine value of 59.4.

The resulting Palm Mid Fraction (IV 45) could for example be used in a confectionery filling, but for that application still has some disadvantages such as a considerable risk for re-crystallisation and a low heat resistance. For this reason the Palm Mid Fraction was enzymatically interesterified until partial interesterification was achieved. Interesterification was carried out at 70°C with 4 wt% Lipozyme TL IM, which is capable of randomizing the distribution of fatty acids on the glycerol backbone of triacylglycerols. Samples were taken after 2 hours and after 4 hours of reaction time. In parallel, the same Palm Mid Fraction was submitted to chemical interesterification for a sufficient time to reach equilibrium of the randomisation of the fatty acid residues over the glycerol backbones. Table 2 summarizes some of the analytical results obtained on the various samples.

Table 2

| Wt% | Non interesterified PMF | Partially interesterified PMF (after 2 h) | Partially interesterified PMF (after 4 h) | Chemically interesterified PMF |
|---|---|---|---|---|
| | $PMF_{NIE}$ | $PMF_{PIE}$ (2h) | $PMF_{PIE}$ (4h) | $PMF_{FIE} = PMF_{CIE}$ |
| C12:0 (lauric acid) | 0.16 | | | |
| SUS | 48.8 | | | |
| SFC20°C | 38.1 | 39.1 | 40.8 | 48.6 |
| SFC35°C | 0.9 | 9.0 | 12.6 | 17.2 |
| SFC40°C | 0 | 4.9 | 7.0 | 10.9 |
| D (%) | 0 | 49.7 | 71.8 | 100 |

On the one hand, the partially interesterified Palm Mid Fractions have increased SFC values at 35°C and 40°C as compared to the non-interesterified starting material and have for this reason a higher heat resistance. On the other hand, the resulting SFC-profiles of the partially interesterified fats are still sufficiently steep, compared to this of the fully interesterified PMF, which provides them with a good melting behaviour, better as compared to the fully esterified Palm Mid Fraction.

The fats obtained were further characterized by a clearly improved resistance against re-crystallization compared to the starting fat, due to the synthesis by interesterification of asymmetrical SSU triglycerides capable of stabilizing the symmetrical SUS triglycerides.

The overall process is characterized by the absence of any chemicals or solvents. Moreover, the enzyme did not suffer from activity losses thanks to a sufficient removal of possible enzyme poisons through the preparation procedure described above.

**Claims**

1. A process for modifying a triglyceride composition wherein a triglyceride composition which contains less than 15 wt. %, preferably less than 10 wt. %, most preferably less than 5 wt. % of lauric acid, and at least 15 wt. % of SUS, is subjected to a partial interesterification step in the presence of an interesterification catalyst, until a triglyceride composition is obtained with a degree of interesterification of between 10 and 90 % and an SFC-profile which is such that

   - the SFC of the modified triglyceride composition at 20°C is more than 25%, preferably more than 35%, more preferably more than 45%, most preferably more than 50%,
   - the SFC of the modified triglyceride composition at 35°C is less than 27%, preferably less than 20%, more preferably less than 15%
   - the difference between SFC at 20°C and the SFC at 35°C is at least 25% preferably at least 30%

   whereby SFC is the SFC measured according to method IUPAC 2.150 a.

2. The process as claimed in claim 1, wherein the partial interesterification step is carried out in the presence of an enzymatic interesterification catalyst.

3. The process as claimed in claim 1 or 2, wherein the partial interesterification step is continued until a degree of interesterification D is obtained of between 10 and 80 %, preferably between 20 and 60 %, wherein the degree of interesterification D is calculated according to formula 1:

$$D = \frac{A.V.(SFC\ PIE35 - SFC\ NIE35)}{A.V.(SFC\ FIE35 - SFC\ NIE35)} \qquad (formula\ 1)$$

   wherein
   SFC PIE35 is the SFC at 35°C of the partially interesterified fat blend,
   SFC FIE35 is the SFC at 35°C of the fat blend after complete interesterification,
   SFC NIE35 is the SFC at 35°C of the fat blend before interesterification,
   and A.V. designates the absolute value of the difference.

4. The process as claimed in any one of claims 1-3, wherein the fat composition after partial interesterification has an SFC at 35°C which is lower compared to the same composition after complete random interesterification.

5. The process as claimed in any one of claims 1-4, wherein the triglyceride composition has an SFC profile before interesterification wherein the difference between the SFC at 20°C and the SFC at 35°C is > 25%, preferably > 35%, more preferably > 45%.

6. The process as claimed in any one of claims 1-5, wherein the triglyceride composition is a vegetable triglyceride composition.

7. The process as claimed in any one of claims 1-6, wherein the SUS-content of the composition before partial interesterification is at least 20 wt. %, preferably at least 30 wt. %, more preferably at least 35 wt. %, whereby S represents a saturated fatty acid with 16 to 24 carbon atoms and U represents an unsaturated C18 fatty acid.

8. The process as claimed in any one of claims 1-7, wherein the S3-content of the composition before partial interesterification is less than 20 wt. %, preferably less than 15 wt. %, more preferably less than 10 wt. %, whereby S is a saturated fatty acid with 16 to 24 carbon atoms.

9. The process as claimed in any one of claims 1-8, wherein the interesterification is continued until the modified fat composition has a SUS/SSU ratio of less than 6, preferably less than 4, more preferably less than 3.

10. The process as claimed in any one of claims 1-9, wherein the partial interesterification step is followed by fractionation of the interesterified fat to remove fractions with a high melting point.

11. The process as claimed in any one of claims 1-10, further comprising the step of employing the modified triglyceride composition or a fraction thereof as confectionary fat or bakery fat.

12. The process as claimed in any one of claims 1-10, further comprising the step of incorporating the modified triglyceride composition or a fraction thereof into a food product, the food product preferably being selected from the group of a confectionery coating, a confectionary filling or cream, a whipping cream, a dough fat and an ice cream fat.


**Patentansprüche**

1. Verfahren zum Modifizieren einer Triglyceridzusammensetzung, wobei eine Triglyceridzusammensetzung, die weniger als 15 Gew.-%, vorzugsweise weniger als 10 Gew.-%, am meisten bevorzugt weniger als 5 Gew.-% Laurinsäure und mindestens 15 Gew.-% SUS enthält, einem Teilumesterungsschritt in Gegenwart eines Umesterungskatalysators unterzogen wird, bis eine Triglyceridzusammensetzung mit einem Umesterungsgrad von zwischen 10 und 90 % und einem derartigen SFC-Profil erhalten wird, dass

  - der SFC der modifizierten Triglyceridzusammensetzung bei 20 °C mehr als 25 %, vorzugsweise mehr als 35 %, mehr bevorzugt mehr als 45 %, am meisten bevorzugt mehr als 50 % beträgt,
  - der SFC der modifizierten Triglyceridzusammensetzung bei 35 °C weniger als 27 %, vorzugsweise weniger als 20 %, mehr bevorzugt weniger als 15 % beträgt,
  - die Differenz zwischen dem SFC bei 20 °C und dem SFC bei 35 °C mindestens 25 %, vorzugsweise mindestens 30 % beträgt

wobei der SFC der SFC ist, der gemäß dem Verfahren IUPAC 2.150 a gemessen wird.

2. Verfahren nach Anspruch 1, wobei der Teilumesterungsschritt in Gegenwart eines enzymatischen Umesterungskatalysators ausgeführt wird.

3. Verfahren nach Anspruch 1 oder 2, wobei der Teilumesterungsschritt fortgesetzt wird, bis ein Umesterungsgrad D von zwischen 10 und 80 %, vorzugsweise zwischen 20 und 60 % erhalten wird, wobei der Umesterungsgrad D gemäß der folgenden Formel 1 berechnet wird:

$$D = \frac{A.V.(SFC\ PIE35 - SFC\ NIE35)}{A.V.(SFC\ FIE35 - SFC\ NIE35)}$$

(Formel 1)

wobei
SFC PIE35 der SFC bei 35 °C der teilweise umgeesterten Fettmischung ist,
SFC FIE35 der SFC bei 35 °C der Fettmischung nach vollständiger Umesterung ist,
SFC NIE35 der SFC bei 35 °C der Fettmischung vor der Umesterung ist und A.V. den absoluten Wert der Differenz bezeichnet.

4. Verfahren nach einem der Ansprüche 1 bis 3, wobei die Fettzusammensetzung nach der Teilumesterung einen SFC bei 35 °C aufweist, der im Vergleich zu der gleichen Zusammensetzung nach der vollständigen ungeordneten Umesterung niedriger ist.

5. Verfahren nach einem der Ansprüche 1 bis 4, wobei die Triglyceridzusammensetzung vor der Umesterung ein SFC-Profil aufweist, wobei die Differenz zwischen dem SFC bei 20 °C und dem SFC bei 35°C > 25 %, vorzugsweise > 35 %, mehr bevorzugt > 45 % ist.

6. Verfahren nach einem der Ansprüche 1 bis 5, wobei die Triglyceridzusammensetzung eine pflanzliche Triglyceridzusammensetzung ist.

7. Verfahren nach einem der Ansprüche 1 bis 6, wobei der SUS-Gehalt der Zusammensetzung vor der Teilumesterung mindestens 20 Gew.-%, vorzugsweise mindestens 30 Gew.-%, mehr bevorzugt mindestens 35 Gew.-% beträgt, wobei S für eine gesättigte Fettsäure mit 16 bis 24 Kohlenstoffatomen steht und U für eine ungesättigte C18-Fettsäure steht.

8. Verfahren nach einem der Ansprüche 1 bis 7, wobei der S3-Gehalt der Zusammensetzung vor der Teilumesterung weniger als 20 Gew.-%, vorzugsweise weniger als 15 Gew.-%, mehr bevorzugt weniger als 10 Gew.-% beträgt, wobei S eine gesättigte Fettsäure mit 16 bis 24 Kohlenstoffatomen ist.

9. Verfahren nach einem der Ansprüche 1 bis 8, wobei die Umesterung fortgesetzt wird, bis die modifizierte Fettzusammensetzung ein Verhältnis von SUS zu SSU von weniger als 6, vorzugsweise weniger als 4, mehr bevorzugt weniger als 3 aufweist.

10. Verfahren nach einem der Ansprüche 1 bis 9, wobei nach dem Teilumesterungsschritt eine Fraktionierung des umgeesterten Fetts zur Entfernung von Fraktionen mit einem hohen Schmelzpunkt erfolgt.

11. Verfahren nach einem der Ansprüche 1 bis 10, ferner umfassend den Schritt des Verwendens der modifizierten Triglyceridzusammensetzung oder einer Fraktion davon als Konditoreifett oder Bäckereifett.

12. Verfahren nach einem der Ansprüche 1 bis 10, ferner umfassend den Schritt des Beimischens der modifizierten Triglyceridzusammensetzung oder einer Fraktion davon zu einem Lebensmittelprodukt, wobei das Lebensmittelprodukt vorzugsweise ausgewählt ist aus der Gruppe einer Konditoreibeschichtung, einer Konditoreifüllung oder -creme, einer Schlagsahne, einem Teigfett und einem Eiscremefett.

**Revendications**

1. Procédé pour modifier une composition de triglycérides, dans lequel une composition de triglycérides qui contient moins de 15% en poids, de préférence moins de 10 % en poids, idéalement moins de 5 % en poids d'acide laurique, et au moins 15 % en poids de SUS, est soumise à une étape d'interestérification partielle en présence d'un catalyseur d'interestérification, jusqu'à ce que soit obtenue une composition de triglycérides avec un degré d'interestérification compris entre 10 et 90 % et un profil SFC qui est tel que

- la SFC de la composition de triglycérides modifiée à 20° C est supérieure à 25 %, de préférence supérieure à 35 %, mieux encore supérieure à 45 %, idéalement supérieure à 50 %,
- la SFC de la composition de triglycérides à 35° C est inférieure à 27 %, de préférence inférieure à 20 %, mieux encore inférieure à 15%
- la différence entre la SFC à 20° C et la SFC à 35° C est d'au moins 25 %, de préférence d'au moins 30 %

la SFC étant la SFC mesurée selon le procédé IUPAC 2.150a.

2. Procédé tel que revendiqué dans la revendication 1, dans lequel l'étape d'interestérification partielle est exécutée en présence d'un catalyseur d'interestérification enzymatique.

3. Procédé tel que revendiqué dans la revendication 1 ou 2, dans lequel l'étape d'interestérification partielle est poursuivie jusqu'à ce que soit obtenu un degré d'interestérification D compris entre 10 et 80 %, de préférence entre 20 et 60 %, dans lequel le degré d'interestérification est calculé selon la formule 1 :

$$D = \frac{A.V.(SFC\ PIE35 - SFC\ NIE35)}{A.V.(SFC\ FIE35 - SFC\ NIE35)} \qquad \text{(formule 1)}$$

dans laquelle
SFC PIE35 est la SFC à 35° C du mélange de graisse partiellement interestérifiée,
SFC FIE35 est la SFC à 35° C du mélange de graisse après interestérification complète,
SFC NIE35 est la SFC à 35° C du mélange de graisse avant interestérification,
et A.V. désigne la valeur absolue de la différence.

4.  Procédé tel que revendiqué dans l'une quelconque des revendications 1 - 3, dans lequel la composition de graisse après interestérification partielle a une SFC à 35° C qui est moindre comparée à la même composition après interestérification aléatoire complète.

5.  Procédé tel que revendiqué dans l'une quelconque des revendications 1 - 4, dans lequel la composition de triglycérides a un profil SFC avant interestérification dans lequel la différence entre la SFC à 20° C et la SFC à 35° C est > 25 %, de préférence > 35 %, mieux encore > 45 %.

6.  Procédé tel que revendiqué dans l'une quelconque des revendications 1-5, dans lequel la composition de triglycérides est une composition de triglycérides végétaux.

7.  Procédé tel que revendiqué dans l'une quelconque des revendications 1-6, dans lequel la teneur en SUS de la composition avant interestérification partielle est d'au moins 20 % en poids, de préférence d'au moins 30 % en poids, mieux encore d'au moins 35 % en poids, S représentant un acide gras saturé ayant de 16 à 24 atomes de carbone et U représentant un acide gras insaturé en C18.

8.  Procédé tel que revendiqué dans l'une quelconque des revendications 1 - 7, dans lequel la teneur en S3 de la composition avant interestérification partielle est inférieure à 20 % en poids, de préférence inférieure à 15 % en poids, mieux encore inférieure à 10 % en poids, S étant un acide gras saturé ayant de 16 à 24 atomes de carbone.

9.  Procédé tel que revendiqué dans l'une quelconque des revendications 1 - 8, dans lequel l'interestérification est poursuivie jusqu'à ce que la composition de graisse modifiée ait un rapport SUS / SSU de moins de 6, de préférence de moins de 4, mieux encore de moins de 3.

10.  Procédé tel que revendiqué dans l'une quelconque des revendications 1 - 9, dans lequel l'étape d'interestérification partielle est suivie par le fractionnement de la graisse interestérifiée pour éliminer les fractions ayant un point de fusion élevé.

11.  Procédé tel que revendiqué dans l'une quelconque des revendications 1 - 10, comprenant en outre l'étape de l'emploi de la composition de triglycérides modifiée ou d'une fraction de celle-ci comme graisse de confiserie ou graisse de boulangerie.

12.  Procédé tel que revendiqué dans l'une quelconque des revendications 1-10, comprenant en outre l'étape de l'incorporation de la composition de triglycérides modifiée ou d'une fraction de celle-ci dans un produit alimentaire, le produit alimentaire étant de préférence sélectionné dans le groupe consistant en un enrobage de confiserie, un fourrage ou une crème de confiserie, une crème à fouetter, une graisse pour pâte et une graisse de crème glacée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 803196 A
- EP 545463 A
- EP 209327 A
- EP 0536824 A
- GB 1111324 A
- EP 1893732 B

- WO 2004112492 A
- WO 03037095 A
- US 20050163909 A
- EP 1731594 A1
- WO 9914294 A

**Non-patent literature cited in the description**

- **D.A.ALLEN.** Interesterification - a vital tool for the future?. *Lipid Technology,* January 1996, 11-13